Europäisches Patentamt

European Patent Office

Office européen des brevets

(19)

(11) Publication number: **0 312 835 B1**

(12) **EUROPEAN PATENT SPECIFICATION**

(45) Date of publication of patent specification: **30.12.92**  (51) Int. Cl.5: **F02D 41/14**, F02D 41/26

(21) Application number: **88116503.9**

(22) Date of filing: **05.10.88**

(54) **Control apparatus.**

(30) Priority: **22.10.87 JP 267521/87**

(43) Date of publication of application:
**26.04.89 Bulletin 89/17**

(45) Publication of the grant of the patent:
**30.12.92 Bulletin 92/53**

(84) Designated Contracting States:
**DE FR GB IT**

(56) References cited:
**EP-A- 224 195**
**EP-A- 0 185 552**

**PATENT ABSTRACTS OF JAPAN, vol. 5, no. 61 (M-65)[733], 24th April 1981; & JP-A-56 14 836**

**PATENT ABSTRACTS OF JAPAN, vol. 8, no. 146 (M-307)[1583], 7th July 1984, page 161 M 307; & JP-A-59 43 943**

**PATENT ABSTRACTS OF JAPAN, vol. 4, no. 57 (M-9)[539], 26th April 1980, page 33 M 9; & JP-A-55 23 338**

**PATENT ABSTRACTS OF JAPAN, vol. 8, no. 94 (M-293)[1531], 28th April 1984, page 31 M**

**293; & JP-A-59 7753**

(73) Proprietor: **NIPPONDENSO CO., LTD.**
**1-1, Showa-cho**
**Kariya-shi Aichi-ken(JP)**

(72) Inventor: **Kawai, Katsuhiko**
**1-370, Ookura Nagashima-cho**
**Kuwana-gun Mie-ken(JP)**

(74) Representative: **Pellmann, Hans-Bernd, Dipl.-Ing. et al**
**Patentanwaltsbüro Tiedtke-Bühling-Kinne-Grupe-Pellmann Grams-Struif-Winter-Roth Bavariaring 4**
**W-8000 München 2(DE)**

EP 0 312 835 B1

EP 0 312 835 B1

**Description**

This invention generally relates to a control apparatus based on modern control theory. For example, this invention relates to an engine control apparatus such as an engine air-to-fuel (A/F) ratio control apparatus.

Some known control apparatuses and methods use modern control theory to improve response characteristics.

An air/fuel ratio control apparatus for internal combustion engines is disclosed in document EP-A-0 224 195, wherein an air/fuel ratio sensor for analysing the exhaust gas of the internal combustion engine produces an output signal proportional to an air/fuel ratio and the change thereof which forms the basis for a closed loop feedback control of the air/fuel ratio. A control constant modifier controls the variation of the proportional component and the integration component of the feedback control loop in accordance with an air/fuel ratio set for controlling. Means in the form of actuators and control circuits responsive to the output signal from the air/fuel ratio sensor means which is subject to gains relative to the detected air/fuel ratio being different from the rich and the lean regions control the air/fuel ratio of a mixture gas fed to the internal combustion engine on the closed loop control basis and according to the varied control constants.

Furthermore, document EP-A-0 185 552 discloses an apparatus for satisfactorily controlling the operating state of an internal combustion engine, including at least the output torque and the intake air quantity on the basis of a dynamic physical model. The control apparatus in particular comprises demand amount detecting means for detecting the amount of demand in accordance with the driver's will indicated by a stroke of the accelerator pedal and the variation of load of the internal combustion engine, an operation condition varying unit in the form of a set of actuators for varying the condition of operation of the engine, and operating state detecting means in the form of various sensors for detecting the operating state of the engine including at least the output torque, rotational speed and intake air quantity. A target value setting unit determines target values of respective state variables of the operating condition of the engine including the target output torque and the target intake air quantity according to the demand amount detected. The operating condition varying unit is controlled by a control unit which determines a feedback amount of the operating condition variables, so that variables of the detected operating state are equal to the determined target values. The control is effected in order to minimize the fuel supply amount on the basis of the correlation between the intake air quantity and the fuel supply amount when the output torque is made constant and on the basis of an optimal feedback gain estimated by means of an observer and in accordance with the dynamic model.

These known control methods and apparatuses generally have problems as follows.

(1) In modern control theory, a desired control quantity or quanties are calculated on the basis of state variables representing the internal state of a system controlling an controlled object like an engine. The state variables are estimated by constructing an observer. Generally, the state variables and the desired control quantity are periodically updated. Specifically, new state variables are estimated from currently detected values output by sensors, a preceding control quantity, and preceding state variables according to the observer. A new control quantity is determined on the basis of these new state variables. The object is controlled in accordance with the periodically updated control quantity. The accuracy of the construction of an observer greatly affects the accuracy of the control, so that an accurate observer is necessary for a reliable control.

(2) An observer is generally designed through a simulation requiring a long time and much labor.

(3) An observer is constructed in correspondence with a model, so that an accurate observer requires an accurate modeling which causes a complicated model. The complicated model tends to require a lengthy or difficult calculation during the control.

It is an object of this invention to provide a quickly responsive control apparatus dispensing with an observer.

According to the invention, this object is accomplished by a control apparatus comprising:

(a) means for periodically sampling a control parameter y of an engine and output, related to an operating state of the engine,

(b) an actuator adjusting the operating state of the engine, and

(c) means for determining a target control quantity u of the actuator and controlling the actuator in accordance with the determined target control quantity,

wherein the determining/controlling means comprises:

means for storing the detected control parameter and the determined target control quantity, and

means for calculating in synchronism with the sampling a new target control quantity u of the actuator on the basis of a vector of feedback gains Fi and a vector of state variables, wherein the

2

feedback gains Fi are determined on the basis of a dynamic model which is an approximation to the operating state of the engine,

**said control apparatus being characterized in that**

(d) the state variables are composed directly of the control parameter y stored in the storing means and the target control quantity u stored in the storing means, and

(e) the dynamic model of the engine is determined, through approximation, on the basis of an auto-regressive moving average model having a dead time p (p = 0, 1, 2, ...) and an order n, m (n = 1, 2, 3, ..., m = 1, 2, 3, ...), the average model being expressed by the following equation:

$$y(k) = a_1 \cdot y(k-1) + a_2 \cdot y(k-2) +$$
$$\ldots \ldots + a_n \cdot y(k-n) + b_1 \cdot u(k-1-P)$$
$$+ b_2 \cdot u(k-2-p) + \ldots \ldots$$
$$+ b_m \cdot u(k-m-p)$$

where the characters $a_1$, ..., $a_n$ and $b_1$, ..., $b_m$ denote predetermined constants, and the character "k" denotes the number of times of sampling, and

wherein the new target control quantity u(k) is given by the following equation:

$$u(k) = F_1 \cdot y(k) + F_2 \cdot y(k-1) + \ldots + F_n \cdot y(k-n+1)$$
$$+ F_{n+1} \cdot u(k-1) + F_{n+2} \cdot u(k-2)$$
$$+ \ldots + F_{p+n+m-1} \cdot u(k-m-p+1).$$

The control apparatus according to the present invention is designed to ensure a quickly responsive control of the operating state of an engine dispensing with an observer, wherein the control is effected on the basis of modern control theory. In particular, an output value in the form of a control parameter is detected, which is related to the operating state of the engine to be controlled by means of respective actuators serving to adjust the operating state of the engine according to the actual driving conditions and on the basis of a determined target control quantity according to the detected control parameter of the engine. The present state of the operating conditions represented by the detected control parameter and the determined target control quantity is stored and on the basis of a vector of predetermined feedback gains and a vector of state variables a new target control quantity is calculated.

Accordingly, the feedback gains are determined by using a dynamic model which is an approximation to the operating state of the engine based on an auto-regressive moving average model represented by the above referenced equations, wherein p denotes a dead time and n, m denote the order of the equation. Furthermore, the output value y denotes the controlled parameter controlled by the engine and being output, u denotes the quantity of the components fed to the engine and characters $a_1$ ... $a_n$ and $b_1$ ... $b_n$ are predetermined constants. A value of the controlled parameter is periodically sampled depending on the number k of times of sampling. The control parameter is adjusted in accordance with a variable control quantity, the value of which is periodically determined in synchronism with the sampling of the controlled parameter and equals a product a preset optimal feedback gain vector and a state variable vector.

Thus, the control apparatus according to the present invention performs a control of the operating conditions of the engine, in particular the air-to-fuel ratio supplied to the engine by means of a control process which is based on the dynamic model approximated by an auto-regressive moving average model.

Since this special dynamic model is approximated by a dead time p and an n-order delay system, and the control quantity u(k) is expressed by the product of the known input information and the feedback gain, the state variables, hence, are expressed and determined by only known input and output values so that an observer is made unnecessary for providing an accurate and quickly responsive control.

The advantages of the invention will become apparent and obvious to those skilled in the pertinent art upon referring to the following description provided in connection with the accompanying drawings, of which

Fig. 1 is a diagram of a control apparatus according to a basic embodiment of this invention.

Fig. 2 is a diagram of a control apparatus according to a specific embodiment of this invention.

Fig. 3 is a block diagram of a system controlling an A/F ratio in the control apparatus of Fig. 2.

Fig. 4 is another block diagram of the system controlling an A/F ratio in the control apparatus of Fig. 2.

Fig. 5 is a flowchart of a program operating the electronic control unit of Fig. 2.

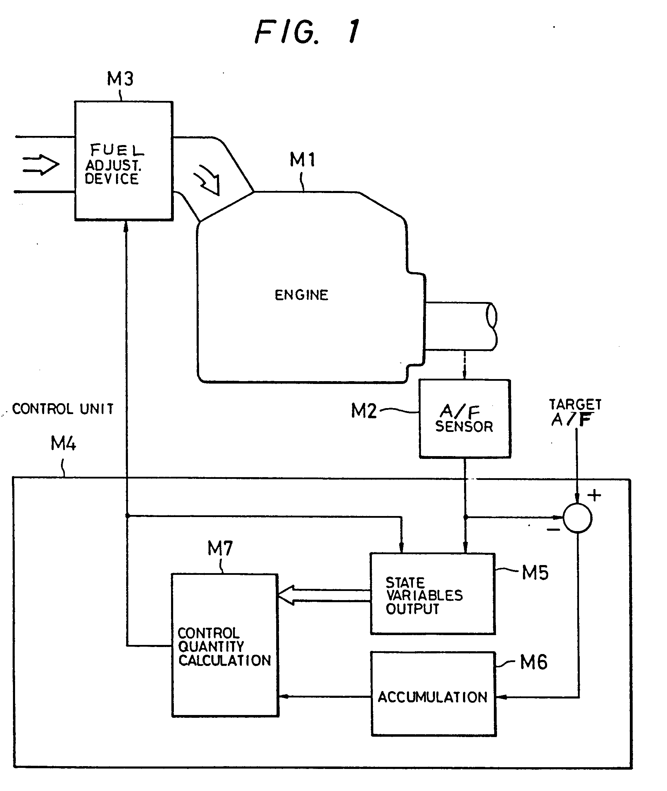

A basic embodiment of this invention will be described with reference to Fig. 1. Although the basic embodiment of Fig. 1 is directed to an engine A/F ratio control apparatus, this invention can be applied to other various control apparatuses.

As shown in Fig. 1, a control apparatus for adjusting an A/F ratio of an air-fuel mixture supplied to an internal combustion engine M1 includes a sensor M2 generating a signal representative of the A/F ratio of the air-fuel mixture. The control apparatus also includes a fuel supply rate adjustment device M3 and a main control unit M4 connected to the sensor M2 and the device M3. The device M3 serves to adjust a rate of fuel supply to the engine M1.

The sensor M2 may be of various known types such as a type outputting a signal which varies linearly as a function of the A/F ratio of the air-fuel mixture supplied to the engine M1. The fuel adjustment device M3 may be of various known structures such as an arrangement including fuel injection valves extending into an air intake passage of the engine M1.

The main control unit M4 receives or internally generates a signal representing a target A/F ratio AFo of an air-fuel mixture supplied to the engine M1. The main control unit M4 derives the actual A/F ratio AFi from the signal generated by the sensor M2. In the main control unit M4, a target control quantity T of the fuel adjustment device M3 is determined in accordance with parameters including the actual A/F ratio AFi and the target A/F ratio AFo. The main control unit M4 supplies the fuel adjustment device M3 with a signal representing the target control quantity T. The device M3 adjusts the rate of fuel supply to the engine M1 by a value or degree corresponding to the target control quantity T. The target control quantity T is designed so that the actual A/F ratio AFi can be regulated at the target A/F ratio AFo.

The main control unit M4 includes a state variable output section M5, an accumulation section M6, and a control quantity calculation section M7.

The state variable output section M5 constructs a dynamic model of the engine M1. Specifically, the dynamic model is determined, through approximation, on the basis of an auto-regressive moving average model having a dead time p (p = 0,1,2,...) and an order [n,m] (n = 1,2,3,..., m = 1,2,3,...). In a typical case, the numbers "p", "n" , and "m" are 1. Furthermore, disturbance is taken into consideration in determining the dynamic model. The state variable output section M5 receives the signal representing the actual A/F ratio AFi and also receives the signal representing the control quantity T of the fuel adjustment device M3. The state variable output section M5 generates a signal indicative of state variables $\mathbf{X}$ which represents the internal state of the dynamic model of the engine M1. The state variables $\mathbf{X}$ are generally composed of the actual A/F ratio AFi and the control quantity T of the fuel adjustment device M3.

A subtracting device within the main control unit M4 receives the signal representative of the actual A/F ratio AFi and the signal representative of the target A/F ratio AFo. The subtracting device generates a signal representing the difference value equal to the target A/F ratio AFo minus the actual A/F ratio AFi, that is, equal to AFo-AFi. The accumulation section M6 receives the difference signal. The section M6 accumulates the difference value "AFo-AFi" and generates a signal representing the resulting accumulation value Z equal to $\Sigma\{AFo-AFi\}$.

The control quantity calculation section M7 receives the state variable signal and the accumulation signal. The section M7 calculates the target control quantity T of the fuel adjustment device M3 from optimal feedback gains $\mathbf{F}$ , the state variables $\mathbf{X}$ , and the accumulation value Z. The optimal feedback gains $\mathbf{F}$ are predetermined in accordance with the previously-mentioned dynamic model. The section M7 generates the signal representing the target control quantity T of the fuel adjustment device M3.

The main control unit M4 is designed in accordance with a dynamic model of a system controlling the A/F ratio of an air-fuel mixture supplied to the engine M1. As described previously, the dynamic model is constructed, through approximation, on the basis of an auto-regressive moving average model having a dead time p (p = 0,1,2,...) and an order [n,m] (n = 1,2,3,..., m = 1,2,3,...). Furthermore, disturbance is taken into consideration in constructing the dynamic model. As described previously, the main control unit M4 includes the state variable output section M5, the accumulation section M6, and the control quantity calculation section M7.

The auto-regressive moving average model will be described in detail hereinafter. The auto-regressive moving average model having a dead time p and an order [n,m] takes the form expressed by the following equation.

$$AFi(k) = a_1 \cdot AFi(k-1) + a_2 \cdot AFi(k-2) +$$
$$... ... + a_n \cdot AFi(k-n) + b_1 \cdot T(k-1-P)$$
$$+ b_2 \cdot T(k-2-p) + ... ...$$
$$+ b_m \cdot T(k-m-p)$$

where the letter k represents the number of times of sampling which corresponds to the moment of sampling. In the case where the order numbers "n" and "m" are equal to 1, the above equation is changed as:

AFi (k) = a·AFi(k-1) + b·T(k-1-p)     (1)

The auto-regressive moving average model is an approximation to the A/F ratio control system when the A/F ratio AFi is determined. In view of disturbance "d", the equation (1) is modified as follows.

AFi(k) a·AFi(k-1) + b·T(k-1-p) + d(k-1)     (2)

In this way, a dynamic model of the A/F ratio control system is constructed.

The dynamic model of the A/F ratio control system is also expressed by the following equation using state variables $X (k) = [X_1(k)\ X_2(k) ... X_{p+1}(k)]^T$.

$$
\begin{pmatrix} X1(k+1) \\ X2(k+1) \\ \vdots \\ Xp(k+1) \\ Xp+1(k+1) \end{pmatrix} = \begin{pmatrix} a & b & 0 & \cdots & 0 \\ 0 & 0 & 1 & \cdots & 0 \\ \vdots & & \ddots & & \vdots \\ & & & \ddots & 1 \\ 0 & 0 & 0 & \cdots & 0 \end{pmatrix} \begin{pmatrix} X1(k) \\ X2(k) \\ \vdots \\ Xp(k) \\ Xp+1(k) \end{pmatrix}
$$

$$
+ \begin{pmatrix} 0 \\ 0. \\ \vdots \\ 0 \\ 1 \end{pmatrix} u(k) + \begin{pmatrix} 1 \\ 0 \\ \vdots \\ 0 \\ 0 \end{pmatrix} d(k)
$$

$$\cdots (3)$$

It is understood from the equations (2) and (3) that the state variables $X (k)$ are expressed as follows.

$X (k) = [AFi(k)\ T(k-p)\ T(k-1+p) ... T(k-2)\ T(k-1)]^T$     (4)

The state variable output section M5 holds the values AFi(k), T(k-p), T(k-p+1), ..., T(k-1) used in the control during a period until the present moment and outputs these values as state variables.

The accumulation section M6 sums up or integrates the difference value equal to the target A/F ratio AFo minus the actual A/F ratio AFi(k), that is, equal to AFo-AFi(k). The accumulation section M6 outputs the resulting accumulation value $Z = \Sigma\{AFo-AFi(k)\}$.

The incorporation of the accumulation value Z into the A/F ratio control compensates errors (roughness in approximation) produced in modeling, disturbances such as variations in the load on the engine M1, variations in the model of the control system due to ageing of the engine M1 or the fuel injection valves, and other adverse factors. Furthermore, the incorporation of the accumulation value Z into the A/F ratio control compensates errors inevitably produced during calculations in a digital control system, for example, quantization errors.

The control quantity calculation section M7 determines a target control quantity T of the fuel adjustment device M3 in accordance with the optimal feedback gains $F$, the state variables $X$ fed from the state variable output section M5, and the accumulation value Z fed from the accumulation section M6. The optimal feedback gains **F** are predetermined on the basis of a dynamic model of the A/F ratio control system. Specifically, the optimal feedback gains **F** can be predetermined by simulation using performance index or function.

In cases where an accumulation value Z is ignored, a target control quantity T(k) is generally given by the following equation.

$$T(k) = F_1 \cdot AFi(k) + F_2 \cdot AFi(k-1) + ... + F_n \cdot AFi(k-n+1)$$
$$+ F_{n+1} \cdot T(k-1) + F_{n+2} \cdot T(k-2)$$
$$+ ... + F_{p+n+m-1} \cdot T(k-m-p+1)$$

where the characters $F_1$, $F_2$, ..., $F_{p+n+m-1}$ are respective components of a feedback gain vector.

The previous description was made on the premise that the A/F ratio control system is linear. In cases where the A/F ratio control system is nonlinear, the total range of the condition or state of the system is divided into portions around respective steady points where the system can be approximately handled as linear with respect to the steady points, and models are constructed for the respective divided ranges.

The construction of a dynamic model, and specifically the determination of the coefficients or values "a" and "b" in the equation (1) can be performed by system identification, and for example, experimentally performed by a step response method.

The control apparatus of Fig. 1 operates as follows. The sensor M2 supplies the state variable output section M5 with the signal representing the actual A/F ratio AFi. The state variable output section M5 also receives the signal representing the control quantity T of the fuel adjustment device M3. The section M5 outputs the actual A/F ratio AFi and the control quantity T, which occurred during a period until the present moment, as state variables **X** representing the internal state of a system controlling the A/F ratio of an air-fuel mixture supplied to the engine M1. The control quantity calucation section M7 is informed of the state variables **X** The accumulation section M6 supplies the control quantity calculation section M7 with the signal representing the accumulation value Z of the difference between the target A/F ratio AFo and the actual A/F ratio AFi. The section M7 calculates a target control quantity T of the fuel adjustment device M3 from the state variables **X** , the accumulation value Z, and the optimal feedback gains **F** . The main control unit M4 controls the fuel adjustment device M3 in accordance with the calculated target control quantity T so that the actual A/F ratio AFi can be regulated at the target A/F ratio AFo.

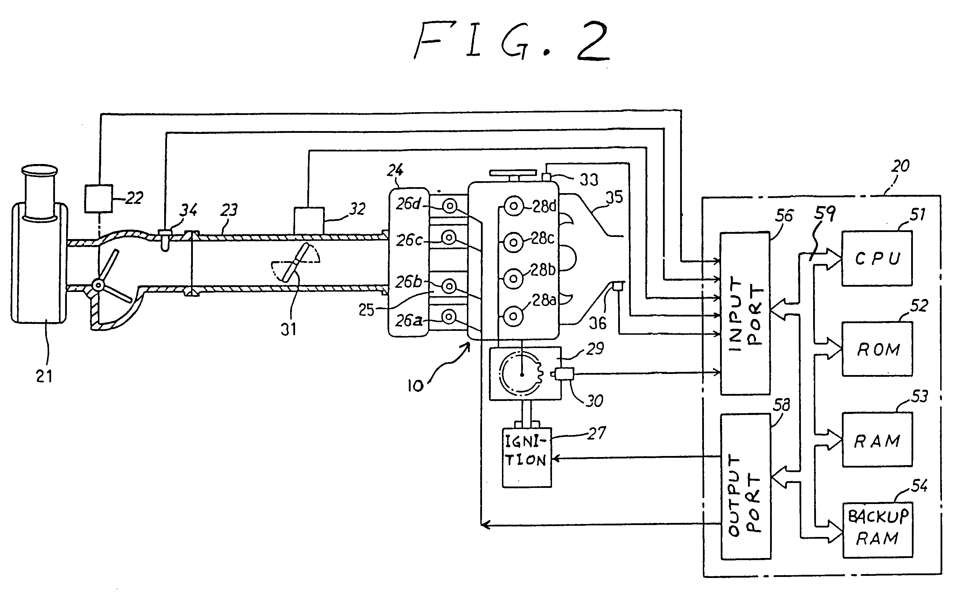

A specific embodiment of this invention will be described with reference to Figs. 2-5. Although the specific embodiment of Figs. 2-5 is basically directed to an engine A/F ratio control apparatus, this invention can be applied to other various control apparatuses.

With reference to Fig. 2, an automotive spark-ignition internal-combustion engine 10 is of the 4-cylinder 4-cycle type. The spark timing of the engine 10 and the rate of fuel injection into the engine 10 are controlled via an electronic control unit 20. The control of the fuel injection rate is included in control of the A/F ratio of an air-fuel mixture supplied to the engine 10. The A/F ratio control will be mainly described hereinafter.

As shown in Fig. 2, an air intake duct 23 extends between an air cleaner 21 and a surge tank 24. The surge tank 24 communicates with cylinders of the engine 10 via respective air intake branch tubes 25 defined by an intake manifold. Air is drawn into the engine cylinders via the air cleaner 21, the air intake duct 23, the surge tank 24, and the air intake branch tubes 25. An air flow meter 22 has a sensing element disposed in the air intake duct 23. The air flow meter 22 detects the rate of air flow into the engine 10 and generates a signal indicative thereof. The air flow rate signal is applied to the electronic control unit 20.

Fuel is pumped from a fuel tank (not shown) to electrically-driven fuel injection valves 26a, 26b, 26c, and 26d attached to the respective air intake branch tubes 25. The devices 26a-26d serve to inject fuel into the branch tubes 25 at an adjustable rate. The rate of fuel injection is adjusted via signals supplied from the electronic control unit 20. The control signals outputted from the electronic control unit 20 to the fuel injection valves 26a-26d include trains of fuel injection pulses. Since the fuel injection valves 26a-26d remain open to allow fuel injection during the duration of a fuel injection pulse, the rate of fuel injection into the engine 10 depends on the durations of the fuel injection pulses. As will be made clear hereinafter, the electronic control unit 20 adjusts the durations or widths of the fuel injection pulses to control the fuel injection rate. The control of the fuel injection rate causes an adjustment of an air-to-fuel (A/F) ratio of an air-fuel mixture supplied to the engine 10.

An ignition circuit 27 generates high tension pulses which are sequentially applied to spark plugs 28a, 28b, 28c, and 28d via a distributor 29. The spark plugs 28a-28d are mounted on the engine 10. Working portions of the spark plugs 28a-28d are disposed in the engine cylinders respectively. When the spark plugs 28a-28d are subjected to high tension pulses, they produce sparks in the associated engine cylinders.

The timing of the occurrence of a spark is controlled via a signal outputted from the electronic control unit 20 to the ignition circuit 27.

A rotational engine speed sensor 30 disposed in the distributor 29 detects the rotational speed Ne of the engine 10 and generates a signal indicative thereof. The engine speed signal is applied to the electronic control unit 20. The engine speed sensor 30 opposes a ring gear rotating in synchronism with rotation of the crankshaft of the engine 10. The engine speed sensor 30 generates pulses at a frequency proportional to the engine rotational speed. For example, the engine speed sensor 30 generates 24 pulses while the engine crankshaft rotates through 720°.

A throttle valve 31 is movably disposed in a portion of the air intake duct 32 downstream of the air flow meter 22. The throttle valve 31 adjustably determines the rate of air flow into the engine 10. Specifically, the rate of air flow into the engine 10 depends on the position of the throttle valve 31 or on the degree of opening of the throttle valve 31. A position sensor 32 connected to the throttle valve 31 detects the opening degree TH of the throttle valve 31 and generates an analog signal indicative thereof. The throttle opening degree signal is applied to the electronic control unit 20. The throttle sensor 32 includes an idle switch which generates an on-off or binary signal representing whether or not the throttle valve 31 is essentially fully closed. The throttle fully closed signal is applied to the electronic control unit 20. Since the throttle valve 31 is essentially fully closed when the engine 10 is idling, the electronic control unit 20 uses the throttle fully closed signal in determining whether or not the engine 10 is idling.

A temperature sensor 33 attached to the engine 10 detects the temperature Thw of engine coolant and generates a signal indicative thereof. The coolant temperature signal is applied to the electronic control unit 20. Another temperature sensor 34 attached to a portion of the air intake duct 23 between the air flow meter 22 and the throttle valve 31 detects the temperature Tam of air drawn into the engine and generates a signal indicative thereof. The air temperature signal is applied to the electronic control unit 20.

An A/F ratio sensor 36 has a sensing element disposed within an exhaust pipe 35 leading from the engine cylinders. The A/f ratio sensor 36 monitors exhaust gases from the engine cylinders and generates a signal which varies linearly as a function of the A/F ratio AFi of the air-fuel mixture converted into the monitored exhaust gases. The A/F ratio signal is applied to the electronic control unit 20.

The electronic control unit 20 includes a microcomputer having a central processing unit (CPU) 51, a read-only memory (ROM) 52, a random-access memory (RAM) 53, a backup RAM 54, an input port 56, and an output port 58. The devices 51-54, 56, and 58 are connected via a bus 59. The input port 56 receives the signals from the air flow meter 22, the throttle sensor 32, the coolant temperature sensor 33, the air temperature sensor 34, the engine speed sensor 30, and the A/F ratio sensor 36. The output port 58 supplies the control signals to the fuel injection valves 26a-26d and the ignition circuit 27.

The electronic control unit 20 derives engine operating conditions, such as the A/F ratio AFi, the air flow rate AR, the air temperature Tam, the throttle opening degree TH, the coolant temperature Thw, and the engine speed Ne, from the input signals outputted by the sensors. The electronic control unit 20 calculates or determines a target fuel injection rate and a target spark timing in accordance with the engine operating conditions. The control signal applied to the fuel injection valves 26a-26d is adjusted in accordance with the target fuel injection rate so that the actual fuel injection rate can be equal to the target fuel injection rate. The target fuel injection rate is determined on the basis of the detected air flow rate so that the target fuel injection rate will be basically proportional to the air flow rate. This relationship between the target fuel injection rate and the air flow rate allows the air-to-fuel ratio of an air-fuel mixture to be maintained essentially at a desired value. In this way, the fuel injection rate control is included in the A/F ratio control. The control signal applied to the ignition circuit 27 is adjusted in accordance with the target spark timing so that sparks can occur within the engine cylinders at a timing corresponding to the target spark timing.

The A/F ratio control will be described in more detail hereinafter. In order to perform A/F ratio control, the electronic control unit 20 is designed as follows.

(1) Modeling of Controlled Object

In cases where a system controlling the A/F ratio is approximated by an auto-regressive moving average model having an order of 1 and a dead time p (p = 1) corresponding to a delay due to a sampling time, the previously-mentioned equation (1) results in the following equation.

$$AFi(k) \quad a \bullet AFi(k-1) \; + \; b \bullet T(k-2) \qquad (5)$$

In view of disturbance "d", the equation (5) corresponding to the model of the A/F ratio control system is modified as follows.

AFi(k) = a•AFi(k-1) + b•T(k-2) + d(k-1)     (6)

where the variable T represents a control quantity of the fuel injection valves 26a-26d which corresponds to the width of a fuel injection pulse applied to the fuel injection valves 26a-26d. In addition, the variable k represents the number of times of execution of control from the moment of the start of first sampling.

The transfer function G of the A/F ratio control system was determined in a step response method. The coefficients or constants "a" and "b" in the equation (6) were experimentally determined by referring to the transfer function G. In this way, the model of the idle speed control system represented by the equation (6) was determined.

(2) Method of Representing State Variables **X**

When state variables **X** (k) = [$X_1$(k) $X_2$(k)]$^T$ are used and the equation (3) is referred to, the equation (6) is rewritten as follows.

$$\begin{pmatrix} X1(k+1) \\ \\ X2(k+1) \end{pmatrix} = \begin{pmatrix} a & b \\ \\ 0 & 0 \end{pmatrix} \begin{pmatrix} X1(k) \\ \\ X2(k) \end{pmatrix}$$

$$+ \begin{pmatrix} 0 \\ \\ 1 \end{pmatrix} T(k) + \begin{pmatrix} 1 \\ \\ 0 \end{pmatrix} d(k)$$

$$\cdots (7)$$

Accordingly, the state variables **X** are given by the following equations.

$$\left. \begin{array}{l} X_1(k) = AFi(k) \\ \\ X_2(k) = T(k-1) \end{array} \right\} \quad \cdots (8)$$

(3) Designing of Integral-added Regulator

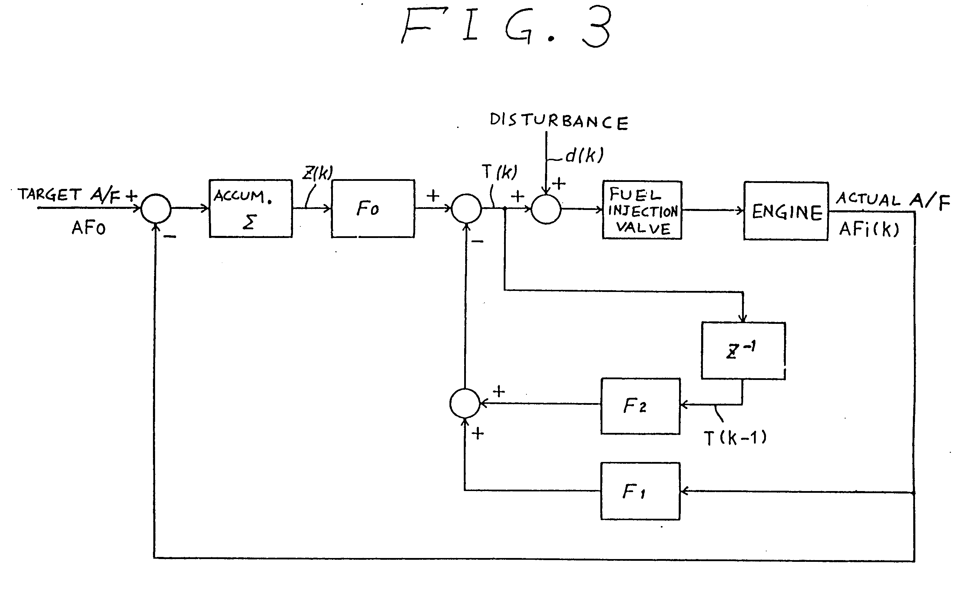

When an integral term or component for compensating control errors is added and an integral-added regulator is designed in connection with the equations (7) and (8), a target control quantity T of the fuel injection valves 26a-26d is determined as follows. With reference to Fig. 3, when optimal feedback gains **F** = [F0 -F1 -F2] and expanded state variables [Z(k) $X_1$(k) $X_2$(k)]$^T$[Z(k) AFi(k) T(k-1)]$^T$ are used, a target control quantity T(k) is given by the following equation.

$$T(k) = \mathbf{F} \cdot \mathbf{X}(k)$$

$$= F0 \cdot Z(k) - F1 \cdot AFi(k) - F2 \cdot T(k-1) \quad \cdots (9)$$

where the variable Z(k) represents an accumulation value of the difference ΔZ(k) between the target A/F ratio AFo and the actual A/F ratio AFi(k) The difference ΔZ(k) equals the target A/F ratio AFo minus the actual A/F ratio AFi(k), that is, ΔZ(k) = AFo-AFi(k). The accumulation value Z(k) is given by the following equation.

$$Z(k+1) = Z(k) + \Delta Z(k) \qquad (10)$$

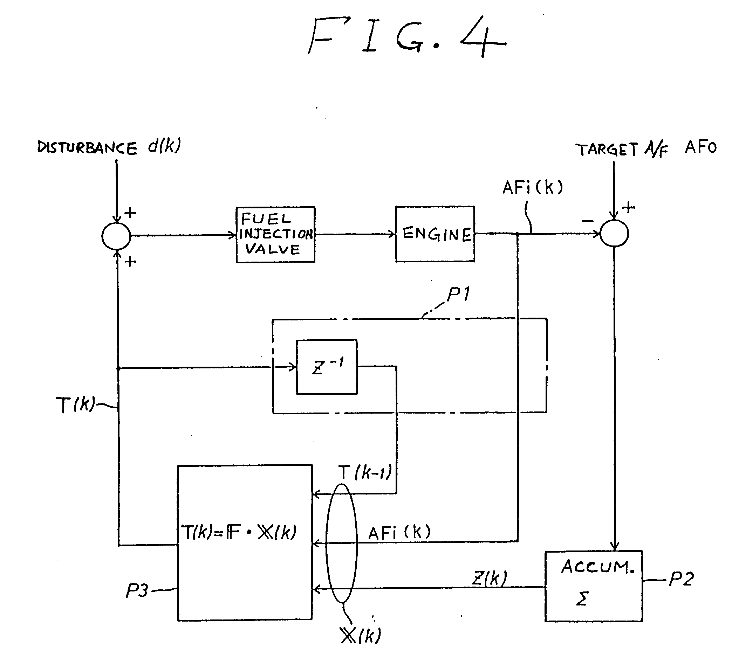

In Fig. 3, the block of $Z^{-1}$ transform represents a function or device deriving the control quantity T(k-1) from the control quantity T(k). Specifically, the $Z^{-1}$ transform block corresponds to the fact that the control quantity T(k-1) used in a certain execution cycle of the control has been stored in the RAM 53 and the stored control quantity T(k-1) is read out and used in the next execution cycle of the control. Fig. 4 is a block diagram of the A/F ratio control system which is obtained by rewriting the block diagram of Fig. 3 with reference to the eq uations (9) and (10). In Fig. 4, blocks P1, P2, and P3 correspond to the state variable output section, the accumulation section, and the control quantity calculation section respectively.

(4) Determination of Optimal Feedback Gains **F**

Optimal feedback gains **F** were determined in a way as follows.

(Optimal Servo System)

The optimal feedback gains **F** were determined so that the following performance index or function could be minimized.

$$\Delta J = \sum_{k=0}^{\infty} \{ Q(AFi(k) - AFo)^2 + R(T(k) - T(k-1))^2 \} \qquad \cdots (11)$$

where the letters Q and R represent weight parameters. The performance index J is intended to minimize the deviation of the actual A/F ratio AFi(k) from the target A/F ratio AFo while restricting the control quantity T(k) of the fuel injection valves 26a-26d. The weight to the restriction on the control quantity T(k) can be varied in accordance with the weight parameters Q and R. The optimal feedback gains **F** were determined by changing the weight parameters Q and R and repeating simulation until optimal control characteristics were obtained. In this embodiment (p = 1), the determined feedback gains **F** = [F0 -F1 -F2] are given by the following equations including the previously-determined model constants "a" and "b".

$$
\left.
\begin{aligned}
F\,0 &= \overline{t} - a \diagup b + 1 \diagup b \\
F\,1 &= (a+1)\,\overline{t} + 1 \diagup b \\
F\,2 &= b\,\overline{t} + 1
\end{aligned}
\right\} \quad \cdots (12)
$$

where the character "$\overline{t}$" denotes a positive solution of the following equation: $a \cdot b \cdot R \cdot \overline{t}^2 + (1-a^2 \cdot R + b^2 \cdot Q)\overline{t} - a \cdot b \cdot Q = 0$

As understood from the equation (12), the optimal feedback gains **F** = [F0 -F1 -F2] depend on the model constants "a" and "b". Accordingly, to ensure the system stability (robustness) against variations (parameter variations) in the system controlling the actual A/F ratio, it is necessary to consider variations of the model constants "a" and "b" in determining the optimal feedback gains **F** . Thus, the simulation was performed while variations of the model constants "a" and "b" which could actually occur were considered, so that the optimal feedback gains **F** able to satisfy the stability were obtained.

The previously-mentioned modeling of the controlled object, method of representing the state variables, designing of the integral-added regulator, and determination of the optimal feedback gains were performed beforehand. The electronic control unit 20 merely uses their results, that is, the equations (9) and (10), in actual A/F ratio control.

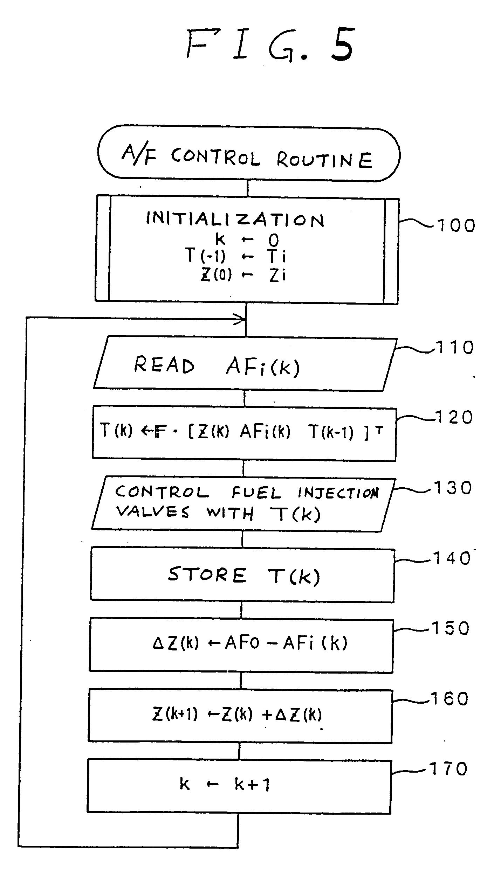

The electronic control unit 20 operates in accordance with a program stored in the ROM 52. When the electronic control unit 20 is powered, the unit 20 starts to execute the program. The program includes various control routines, such as an A/F ratio control routine and a spark timing control routine. Fig. 5 is a flowchart of the A/F ratio control program.

As shown in Fig. 5, a first step 100 of the A/F ratio control program performs initialization. Specifically, the variable k representing the number of times of sampling is set to "0". The initial value T(-1) of the control quantity of the fuel injection valves 26a-26d is set to a predetermined constant Ti. The initial value Z(0) of the accumulation value of the difference between the target A/F ratio AFo and the actual A/F ratio AFi(k) is set to a predetermined constant Zi. After the step 100, the program advances to a step 110.

The step 110 derives the current A/F ratio AFi(k) from the signal outputted by the A/F ratio sensor 35. The derived A/F ratio corresponds to an actual A/F ratio.

A step 120 subsequent to the step 110 determines a target control quantity T(k) of the fuel injection valves 26a-26d in accordance with the optimal feedback gains **F** and the state variables **X** by referring to the following equation or statement.

$$T(k) = \mathbf{F} \cdot [Z(k) \; AFi(k) \; T(k-1)]^T$$

After the step 120, the program advances to a step 130.

The step 130 contols the fuel injection valves 26a-26d in accordance with the control quantity T(k) determined by the preceding step 120. Specifically, the width of a pulse in the fuel injection control signal outputted from the electronic control unit 20 to the fuel injection valves 26a-26d is set to a value corresponding to the control quantity T(k). Since the fuel injection valves 26a-26d remain open to allow fuel injection during the duration of a fuel injection pulse, the rate of fuel injection and the A/F ratio are adjusted in accordance with the control quantity T(k).

A step 140 following the step 130 stores the conrol quantity T(k) in the RAM 53. The stored control quantity will be used as a preceding control quantity T(k-1) in the next execution cycle of the program.

A step 150 subsequent to the step 140 calculates the difference value $\Delta Z(k)$ which equals the target A/F ratio AFo minus the actual A/F ratio AFi(k).

A step 160 subsequent to the step 150 accumulates the difference value and thereby determines the accumulation value Z(k + 1) by referring to the following equation or statement.

$$Z(k+1) = Z(k) + \Delta Z(k)$$

After the step 160, the program advances to a step 170.

The step 170 increments the value k by "1" with reference to the following equation or statement.

$$k = k + 1$$

After the step 170, the program returns to the step 110. Accordingly, the steps 110-170 are reiterated periodically so that the target control quantity of the fuel injection valves 26a-26d is periodically determined and updated. The duration of the fuel injection pulses is varied with the periodically-updated target control quantity of the fuel injection valves 26a-26d.

As described previously, the state variables X which represent the internal state of the A/F ratio control system are composed of the input AFi(k) to the system, the output T(k-1) from the system, and the accumulation value Z(k) of the difference between the actual A/F ratio and the target A/F ratio. The control quantity T(k) of the fuel injection valves 26a-26d is determined by the vector product of the state variables **X** and the preset optimal feedback gains **F** . In this way, the control quantity T(k) of the fuel injection valves 26a-26d is determined without using an observer. The dispensation of an observer can simplify the structure of the A/F ratio control system. In addition, the use of modern control theory in the A/F ratio control allows a quick response and an excellent stability of the control.

For example, in modeling of the system, the dead time or delay p may differ from one or unity.

An output value related to an operating state of a controlled object is detected. An actuator serves to adjust the operating state of the controlled object. A target control quantity of the actuator is determined on the basis of the detected output value. The actuator is controlled in accordance with the determined target control quantity. The detected output value and the determined target control quantity are stored. A new target control quantity of the actuator is calculated on the basis of a vector of predetermined feedback gains and a vector of state variables. The feedback gains are determined by using a dynamic model which is an approximation to the operating state of the controlled object. The state variables are composed directly of the stored output value and the stored control quantity.

**Claims**

1.  A control apparatus comprising:
    (a) means (M2) for periodically sampling (k, k + 1) a control parameter y of an engine (M1) and an output, related to an operating state of the engine (M1),
    (b) an actuator (M3) adjusting the operating state of the engine (M1), and
    (c) means (M4) for determining a target control quantity u of the actuator (M3) and controlling the actuator (M3) in accordance with the determined target control quantity,
    wherein the determining/controlling means (M4) comprises:
    means (53) for storing the detected control parameter and the determined target control quantity, and
    means (M7, 51) for calculating in synchronism with the sampling a new target control quantity u of the actuator (M3) on the basis of a vector of feedback gains Fi and a vector of state variables, wherein the feedback gains Fi are determined on the basis of a dynamic model which is an approximation to the operating state of the engine (M1),
    **said control apparatus being characterized in that**
    (d) the state variables are composed directly of the control parameter y stored in the storing means (53) and the target control quantity u stored in the storing means (53), and
    (e) the dynamic model of the engine (M1) is determined, through approximation, on the basis of an auto-regressive moving average model having a dead time p (p = 0, 1, 2, ...) and an order n, m (n = 1, 2, 3, ..., m = 1, 2, 3, ...), the average model being expressed by the following equation:

    $$y(k) = a_1 \cdot y(k\text{-}1) + a_2 \cdot y(k\text{-}2) +$$
    $$\dots \dots + a_n \cdot y(k\text{-}n) + b_1 \cdot u(k\text{-}1\text{-}P)$$
    $$+ b_2 \cdot u(k\text{-}2\text{-}p) + \dots \dots$$
    $$+ b_m \cdot u(k\text{-}m\text{-}p)$$

    where the characters $a_1$, ..., an and $b_1$, , bm denote predetermined constants, and the character "k" denotes the number of times of sampling, and
    wherein the new target control quantity u(k) is given by the following equation:

    $$u(k) = F_1 \cdot y(k) + F_2 \cdot y(k\text{-}1) + \dots + F_n \cdot y(k\text{-}n + 1)$$
    $$+ F_{n+1} \cdot u(k\text{-}1) + F_{n+2} \cdot u(k\text{-}2)$$
    $$+ \dots + F_{p+n+m\text{-}1} \cdot u(k\text{-}m\text{-}p + 1)$$

2.  A control apparatus according to claim 1, being characterized by comprising:
    (a) means (M2) for detecting an air-to-fuel ratio of an air-fuel mixture supplied to the engine (M1),
    (b) an actuator (M3) adjusting the air-to-fuel ratio, and
    (c) means (M4) for determining a target control quantity of the actuator (M3) on the basis of the detected air-to-fuel ratio and controlling the actuator (M3) in accordance with the determined target control quantity,
    wherein the determining/controlling means (M4) comprises:
    means (53) for storing the detected air-to-fuel ratio and the determined target control quantity, and
    means (M7, 51) for calculating a new target control quantity of the actuator (M3) on the basis of a vector of predetermined optimal feedback gains and a vector of state variables, wherein the optimal feedback gains depend on model constants in a dynamic model which is an approximation to the operating state of the engine (M1), and wherein the state variables are composed directly of the airto-fuel ratio stored in the storing means (53) and the target control quantity stored in the storing means (53).

**Patentansprüche**

1.  Steuereinrichtung, die
    (a) eine Einrichtung (M2) zum periodischen Abfragen (k, k + 1) eines Steuerparameters y einer Maschine (M1) und eines einen Betriebszustand der Maschine (M1) betreffenden Ausgangssignals,
    (b) eine Stellvorrichtung (M3) zum Einstellen des Betriebszustands der Maschine (M1) und

EP 0 312 835 B1

(c) eine Einrichtung (M4) aufweist, die eine Soll-Regelgröße u für die Stellvorrichtung (M3) bestimmt und die Stellvorrichtung (M3) entsprechend der bestimmten Soll-Regelgröße steuert, wobei die Bestimmungs/Steuereinrichtung (M4)

eine Einrichtung (53) zum Speichern des erfaßten Regelparameters und der bestimmten Soll-Regelgröße und

eine Einrichtung (M7, 51) aufweist, die synchron mit der Abfrage von einem Vektor der Rückführungsverstärkungen Fi und einem Vektor der Zustandsgrößen ausgehend eine neue Soll-Regelgröße u für die Stellvorrichtung (M3) berechnet, wobei die Rückführungsverstärkungen Fi aufgrund eines dynamischen Modells bestimmt sind, das eine Annäherung an den Betriebszustand der Maschine (M1) ist,

wobei die Steuereinrichtung dadurch gekennzeichnet ist, daß

(d) die Zustandsgrößen direkt aus dem in der Speichereinrichtung (53) gespeicherten Steuerparameter y und der in der Speichereinrichtung (53) gespeicherten Soll-Regelgröße u zusammengesetzt sind und

(e) das dynamische Modell für die Maschine (M1) durch Annäherung aufgrund eines Selbstrückstellungs-Mittelungsmodells mit einer Totzeit p (p = 0, 1, 2, ...) und einer Ordnung n, m (n = 1, 2, 3, ..., m = 1, 2, 3, ...) bestimmt ist, welches durch die folgende Gleichung ausgedrückt ist:

$$y(k) = a_1\, y(k\text{-}1) + a_2\, y\,(k\text{-}2) +$$
$$\dots\dots + a_n\, y(k\text{-}n) + b_1\, u(k\text{-}1\text{-}p)$$
$$+ b_2\, u(k\text{-}2\text{-}p) + \dots\dots$$
$$+ b_m\, u(k\text{-}m\text{-}p)$$

in der $a_1$, ...., $a_n$ und $b_1$, ... $b_m$ vorbestimmte Konstanten bezeichnen, und der Buchstabe k die Anzahl der Abfragungen bezeichnet und die neue Soll-Regelgröße u(k) durch die folgende Gleichung gegeben ist:

$$u(k) = F_1\, y(k) + F_2\, y(k\text{-}1) + \dots + F_n\, y(k\text{-}n+1)$$
$$+ F_{n+1}\, u(k\text{-}1) + F_{n+2}\, u(k\text{-}2)$$
$$+ \dots + F_{p+n+m\text{-}1}\, u(k\text{-}m\text{-}p+1)$$

**2.** Steuereinrichtung nach Anspruch 1, gekennzeichnet durch

(a) eine Vorrichtung (M2) zum Messen eines Luft/Brennstoff-Verhältnisses eines der Maschine (M1) zugeführten Luft/Brennstoff-Gemisches,

(b) ein Stellglied (M3) zum Einstellen des Luft/Brennstoff-Verhältnisses und

(c) eine Einrichtung (M4) zum Bestimmen einer Soll-Steuergröße für das Stellglied (M3) aufgrund des erfaßten Luft/Brennstoff-Verhältnisses und zum Steuern des Stellglieds (M3) entsprechend der bestimmten Soll-Steuergröße, wobei die Bestimmungs/Steuereinrichtung (M4)

eine Einrichtung (53) zum Speichern des erfaßten Luft/Brennstoff-Verhältnisses und der bestimmten Soll-Steuergröße und

eine Einrichtung (M7, 51) aufweist, die auf der Grundlage eines Vektors vorbestimmter optimaler Rückführungsverstärkungen und eines Vektors von Zustandsgrößen eine neue Soll-Steuergröße für das Stellglied (M3) berechnet, wobei die optimalen Rückführungsverstärkungen von Modellkonstanten in einem dynamischen Modell abhängig sind, das ein Näherungsansatz für den Betriebszustand der Maschine (M1) ist, und wobei die Zustandsgrößen direkt aus dem in der Speichereinrichtung (53) gespeicherten Luft/Brennstoff-Verhältnis und der in der Speichereinrichtung (53) gespeicherten Soll-Steuergröße zusammengestellt sind.

**Revendications**

**1.** Un appareil de commande comprenant :

(a) des moyens (M2) destinés à échantillonner périodiquement (k, k + 1) un paramètre de commande y d'un moteur (M1) et un signal de sortie, lié à l'état de fonctionnement du moteur (M1),

(b) un actionneur (M3) qui est destiné à régler l'état de fonctionnement du moteur (M1), et

(c) des moyens (M4) qui sont destinés à déterminer une grandeur de commande désirée u de l'actionneur (M3) et à commander l'actionneur (M3) conformément à la grandeur de commande désirée qui est déterminée,

12

dans lequel les moyens de détermination/commande (M4) comprennent :

des moyens (53) destinés à enregistrer le paramètre de commande détecté et la grandeur de commande désirée déterminée, et

des moyens (M7, 51) qui sont destinés à calculer, en synchronisme avec l'échantillonnage, une nouvelle grandeur de commande désirée u de l'actionneur (M3), sur la base d'un vecteur de gains de rétroaction Fi et d'un vecteur de variables d'état, les gains de rétroaction Fi étant déterminés sur la base d'un modèle dynamique qui est une approximation de l'état de fonctionnement du moteur (M1),

cet appareil de commande étant caractérisé en ce que

(d) les variables d'état sont constituées directement par le paramètre de commande y qui est enregistré dans les moyens d'enregistrement (53) et par la grandeur de commande désirée u qui est enregistrée dans les moyens d'enregistrement (53), et

(e) le modèle dynamique du moteur (M1) est déterminé, par approximation, sur la base d'un modèle à moyenne mobile du type à auto-régression, ayant un temps mort p (p = 0, 1, 2, ...) et un ordre n, m (n = 1, 2, 3, ..., m = 1, 2, 3, ...), le modèle à moyenne s'exprimant par la relation suivante :

$$y(k) = a_1.y(k-1) + a_2.y(k-2) +$$
$$... ... + a_n.y(k-n) + b_1.u(k-1-p)$$
$$+ b_2.u(k-2-p) + ... ...$$
$$+ b_m.u(k-m-p)$$

dans laquelle les caractères $a_1$, ..., $a_n$ et $b_1$, ..., $b_m$ désignent des constantes prédéterminées, et le caractère "k" désigne le nombre d'instants d'échantillonnage, et dans lequel la nouvelle grandeur de commande désirée u(k) est donnée par la relation suivante :

$$u(k) = F_1.y(k) + F_2.y(k-1) + ... + F_n.y(k-n+1)$$
$$+ F_{n+1}.u(k-1) + F_{n+2}.u(k-2)$$
$$+ ... + F_{p+n+m-1}.u(k-m-p+1)$$

2.  Un appareil de commande selon la revendication 1, caractérisé en ce qu'il comprend :

(a) des moyens (M2) destinés à détecter un rapport air-carburant d'un mélange air/carburant qui est fourni au moteur (M1),

(b) un actionneur (M3) qui est destiné à régler le rapport air/carburant, et

(c) des moyens (M4) qui sont destinés à déterminer une grandeur de commande désirée de l'actionneur (M3), sur la base du rapport air/carburant détecté, et à commander l'actionneur (M3) conformément à la grandeur de commande désirée qui est déterminée,

dans lequel les moyens de détermination/commande (M4) comprennent :

des moyens (53) qui sont destinés à enregistrer le rapport air/carburant détecté et la grandeur de commande désirée déterminée, et

des moyens (M7, 51) qui sont destinés à calculer une nouvelle grandeur de commande désirée de l'actionneur (M3), sur la base d'un vecteur de gains de rétroaction optimaux prédéterminés et d'un vecteur de variables d'état, dans lequel les gains de rétroaction optimaux dépendent de constantes de modèle dans un modèle dynamique qui est une approximation de l'état de fonctionnement du moteur (M1), et dans lequel les variables d'état sont constituées directement par le rapport air/carburant qui est enregistré dans les moyens d'enregistrement (53) et par la grandeur de commande désirée qui est enregistrée dans les moyens d'enregistrement (53).

# FIG. 1

M3
FUEL ADJUST. DEVICE

M1
ENGINE

M2
A/F SENSOR

TARGET A/F

CONTROL UNIT

M4

M7
CONTROL QUANTITY CALCULATION

M5
STATE VARIABLES OUTPUT

M6
ACCUMULATION

FIG. 2

EP 0 312 835 B1

FIG. 3

# FIG. 4

DISTURBANCE $d(k)$

TARGET A/F AFo

AFi(k)

FUEL INJECTION VALVE

ENGINE

$P1$

$Z^{-1}$

$T(k)$

$T(k-1)$

$T(k)=\mathbb{F} \cdot \mathbb{X}(k)$

AFi(k)

$P3$

$\mathbb{X}(k)$

ACCUM. $\Sigma$

$P2$

$Z(k)$

EP 0 312 835 B1

# F I G. 5

```
        ┌─────────────────────────────┐
        │      A/F  CONTROL  ROUTINE  │
        └─────────────────────────────┘
                      │
        ┌─────────────────────────────┐
        │       INITIALIZATION        │ ~100
        │           k ← 0             │
        │        T(-1) ← Ti           │
        │         Z(0) ← Zi           │
        └─────────────────────────────┘
                      │
        ┌─────────────────────────────┐
        │        READ  AFi(k)         │ ~110
        └─────────────────────────────┘
                      │
        ┌─────────────────────────────┐
        │ T(k) ← F·[Z(k) AFi(k) T(k-1)]ᵀ │ ~120
        └─────────────────────────────┘
                      │
        ┌─────────────────────────────┐
        │  CONTROL  FUEL  INJECTION   │ ~130
        │  VALVES  WITH  T(k)         │
        └─────────────────────────────┘
                      │
        ┌─────────────────────────────┐
        │        STORE  T(k)          │ ~140
        └─────────────────────────────┘
                      │
        ┌─────────────────────────────┐
        │   ΔZ(k) ← AFo - AFi(k)      │ ~150
        └─────────────────────────────┘
                      │
        ┌─────────────────────────────┐
        │   Z(k+1) ← Z(k) + ΔZ(k)     │ ~160
        └─────────────────────────────┘
                      │
        ┌─────────────────────────────┐
        │         k ← k+1             │ ~170
        └─────────────────────────────┘
```

Step 100: INITIALIZATION $k \leftarrow 0$, $T(-1) \leftarrow T_i$, $Z(0) \leftarrow Z_i$

Step 110: READ $AF_i(k)$

Step 120: $T(k) \leftarrow F \cdot [Z(k)\ AF_i(k)\ T(k-1)]^T$

Step 130: CONTROL FUEL INJECTION VALVES WITH $T(k)$

Step 140: STORE $T(k)$

Step 150: $\Delta Z(k) \leftarrow AF_o - AF_i(k)$

Step 160: $Z(k+1) \leftarrow Z(k) + \Delta Z(k)$

Step 170: $k \leftarrow k+1$